# EUROPÄISCHE PATENTSCHRIFT

(11) **EP 3 150 056 B1**
(45) Veröffentlichungstag und Bekanntmachung des Hinweises auf die Patenterteilung: **04.12.2019**
(21) Anmeldenummer: 16177699.2
(22) Anmeldetag: 04.07.2016
(51) Int. Cl.: A01D 75/18, A01B 69/00, A01B 69/04

(54) **SELBSTFAHRENDE LANDWIRTSCHAFTLICHE ARBEITSMASCHINE**
SELF-PROPELLED AGRICULTURAL MACHINE
MACHINE AGRICOLE AUTOMOBILE

(30) Priorität: 30.09.2015 DE 102015116574
(43) Veröffentlichungstag der Anmeldung: 05.04.2017
(73) Patentinhaber: CLAAS E-Systems GmbH, 49201 Dissen am Teutoburger Wald (DE)
(72) Erfinder: Kettelhoit, Boris, 33335 Gütersloh (DE); Sagemüller, Burkhard, 33335 Gütersloh (DE); Krause, Thilo, 39249 Glinde (DE); Laing, Christian, 33428 Harsewinkel (DE); Vilander, Jesper, 3480 Fredensborg (DK); Heyne, Benjamin, 49086 Osnabrück (DK); Blas, Morten Rufus, 2800 Kongens Lyngby (DK); Lundberg Lykkegaard, Kasper, 2700 Kobennann (DK); Ingibergsson, Johann, 2400 Copenhagen N.V. (DK); Madsen, Ertbolle Madsen, 2830 Virum (DK)
(74) Vertreter: Budach, Steffen

(56) Entgegenhaltungen:
- EP-A1- 1 524 638
- WO-A1-2007/115942
- WO-A1-2008/043852
- WO-A1-2014/167680
- WO-A1-2015/000839
- DE-A1-102008 001 672
- US-A1- 2010 104 199
- US-A1- 2011 050 482
- US-A1- 2015 183 370

## Beschreibung

Die Erfindung betrifft eine selbstfahrende landwirtschaftliche Arbeitsmaschine gemäß dem Oberbegriff von Anspruch 1.

Der Begriff "selbstfahrende landwirtschaftliche Arbeitsmaschine" ist vorliegend weit zu verstehen. Darunter fallen nicht nur Erntemaschinen wie Mähdrescher und Feldhäcksler, sondern auch Zugmaschinen wie Traktoren o. dgl..

Mit den immer steigenden Abmessungen der in Rede stehenden landwirtschaftlichen Arbeitsmaschine stellt sich die für die jeweilige Situation richtige Reaktion auf Objekte im Umfeld der Arbeitsmaschine als immer größere Herausforderung für den Bediener dar. Solche Objekte, bei denen es sich um Menschen, Tiere, ortsfeste oder sich bewegende Gegenstände im Umfeld der Arbeitsmaschine handeln kann, werden vorliegend ganz allgemein als "Umfeldobjekte" bezeichnet.

Die bekannte selbstfahrende landwirtschaftliche Arbeitsmaschine (WO 2015/000839 A1), von der die Erfindung ausgeht, ist als Traktor ausgestaltet, der eine sensorgestützte Einrichtung zur Vermeidung von Kollisionen mit Umfeldobjekten aufweist. Im Einzelnen ist die Arbeitsmaschine mit einem Fahrerassistenzsystem ausgestattet, das basierend auf den Signalen einer Sensoranordnung Steueraktionen innerhalb der Arbeitsmaschine erzeugt. Eine solche Steueraktion ist beispielsweise eine Lenkaktion, mit der das Fahrerassistenzsystem eine Ausweichbewegung um ein detektiertes Umfeldobjekt einleitet.

Die Sensoranordnung der bekannten Arbeitsmaschine weist zwei 3D-Kameras auf, die einerseits die geometrische Ausdehnung der von dem Traktor zu ziehenden Last und andererseits das Umfeld der Arbeitsmaschine in Fahrtrichtung erfassen. Es ist in diesem Zusammenhang auch bekannt geworden, anstelle der 3D-Kameras Laserentfernungsmesser oder Time-of-Flight-Kameras anzuwenden.

Eine Herausforderung bei der bekannten landwirtschaftlichen Arbeitsmaschine stellt das Erreichen einer hohen Betriebseffizienz bei gleichzeitig hoher Betriebssicherheit dar. Der Grund hierfür besteht darin, dass sich eine hohe Betriebssicherheit zwar mit einer hohen Empfindlichkeit der Sensoranordnung erreichen lässt, die allgemeinhin aber zu einer vergleichsweise hohen Fehlerkennungsrate, damit zu häufigen unnötigen Betriebsunterbrechungen und im Ergebnis zu einer reduzierten Betriebseffizienz führt. Das Absenken der Empfindlichkeit der Sensoranordnung dagegen führt zu einer geringen Zuverlässigkeit der Sensoranordnung, was wiederum die Betriebssicherheit beeinträchtigt.

Weiter nachteilig bei der bekannten landwirtschaftlichen Arbeitsmaschine ist die Tatsache, dass auch solche sich anbahnende Kollisionen, die sich mit hoher Wahrscheinlichkeit überhaupt nicht realisieren, zu einem Stillstand der Arbeitsmaschine führen, was die Betriebseffizienz beträchtlich reduzieren kann.

Der Erfindung liegt das Problem zugrunde, die bekannte selbstfahrende landwirtschaftliche Arbeitsmaschine derart auszugestalten und weiterzubilden, dass sowohl deren Betriebssicherheit als auch deren Betriebseffizienz erhöht werden.

Das obige Problem wird bei einer selbstfahrenden landwirtschaftlichen Arbeitsmaschine gemäß dem Oberbegriff von Anspruch 1 durch die Merkmale des kennzeichnenden Teils von Anspruch 1 gelöst.

Die vorschlagsgemäße Lehre beruht auf der grundsätzlichen Erkenntnis, dass sich eine auf eine hohe Betriebssicherheit und gleichzeitig eine hohe Betriebseffizienz ausgerichtete Erzeugung der Steueraktionen dadurch erreichen lässt, dass den Umfeldinformationen jeweils eine Dringlichkeitsstufe zugeordnet wird. Basierend auf der Dringlichkeitsstufe kann das Fahrerassistenzsystem entscheiden, welche Steueraktion in welcher Intensität durchgeführt werden soll.

Ganz allgemein wird vorgeschlagen, dass das Fahrerassistenzsystem den Umfeldinformationen jeweils eine Dringlichkeitsstufe zuordnet und die Steueraktionen basierend auf den Umfeldinformationen und den jeweils zugeordneten Dringlichkeitsstufen erzeugt.

Mit der Einführung von Dringlichkeitsstufen kann die Reaktion auf eine weniger dringliche Umfeldinformation, wie beispielsweise das Erfassen einer den Erntebetrieb nicht gefährdenden Erdanhäufung, zunächst zurückgestellt werden. Eine dringliche Umfeldinformation, beispielsweise die Erfassung eines Menschen in unmittelbarer Nähe des Vorsatzgerätes eines Mähdreschers, kann das Fahrerassistenzsystem wiederum mit allerhöchster Priorität behandeln, indem es die entsprechende Steueraktion, beispielsweise das Bremsen der Arbeitsmaschine, unverzüglich mit hoher Intensität, also mit hoher Bremsleistung, erzeugt. Dies ist Gegenstand des bevorzugten Anspruchs 2, nach dem das Fahrerassistenzsystem die auf die Umfeldinformationen zurückgehenden Steueraktionen in Abhängigkeit von der jeweiligen Dringlichkeitsstufe vorrangig oder nachrangig gegenüber anderen anstehenden Steueraktionen umsetzt. Bei der vorrangigen Umsetzung der Steueraktionen kann dies softwaremäßig mit einem Mechanismus nach Art eines Interrupts realisiert sein.

Bei der besonders bevorzugten Ausgestaltung gemäß Anspruch 7 ergibt sich eine besonders einfache Ermittlung der Steueraktionen, da mindestens eine Dringlichkeitsstufe einer vorbestimmten Steueraktion fest zugeordnet ist.

Die weiter bevorzugten Ausgestaltungen gemäß den Ansprüchen 8 bis 10 betreffen Varianten für die Festlegung der Dringlichkeitsstufe der jeweiligen Umfeldinformationen. Dabei kann es vorgesehen sein, dass eine Wichtung der in den Ansprüchen 7 bis 9 vorgestellten Einflussfaktoren, beispielsweise der Fahrgeschwindigkeit einerseits und der Objektkategorie andererseits, vorgenommen wird.

Die Erzeugung von Umfeldinformationen zu einem Umfeldobjekt in differenzierter Weise ist dadurch möglich, dass sich eine Umfeldinformation aus den Sensorinformationen zweier unterschiedlicher Sensoren zusammensetzt. Mit "unterschiedlich" ist hier gemeint, dass die Sensoren ihre jeweiligen Sensorinformationen basierend auf unterschiedlichen physikalischen Eigenschaften des Umfeldobjekts erfassen. Damit ist es möglich, ein Umfeldobjekt mittels einer Normallichtkamera einerseits und einer Thermokamera andererseits zu erfassen. Während die Normallichtkamera Aufschluss über die Formgebung, die Farbgebung o. dgl. des Umfeldobjekts gibt, lässt sich mittels der Thermokamera die Temperatur des Umfeldobjekts ermitteln. Aus diesen Sensorinformationen lässt sich mittels des Fahrerassistenzsystems eine Umfeldinformation erzeugen, die beispielsweise Detailinformationen darüber umfasst, ob das Umfeldobjekt der Objektkategorie "lebend" oder der Objektkategorie "nicht lebend" zuzuordnen ist. Daraus wiederum kann das Fahrerassistenzsystem ableiten, wie auf das detektierte Umfeldobjekt reagiert werden soll.

Ganz allgemein ist es so, dass die Sensoranordnung mindestens einen weiteren Sensor aufweist, der eine weitere Sensorinformation basierend auf einer weiteren physikalischen Eigenschaft des Umfeldobjekts erfasst, wobei das Fahrerassistenzsystem aus der ersten Sensorinformation und der weiteren Sensorinformation eine Umfeldinformation zu dem Umfeldobjekt erzeugt. Dabei kann sich die Umfeldinformation im einfachsten Fall aus der Kombination der Sensorinformationen der Sensoren ergeben. Es ist aber auch denkbar, dass hier eine Vorverarbeitung der Sensorinformationen stattfindet, insbesondere, dass abgeleitete Größen wie der geometrische Umriss, die Temperaturverteilung, die Position und/oder Bewegung eines Umfeldobjekts aus den Sensorinformationen ermittelt und der Umfeldinformation zugeordnet werden.

Wie oben erläutert, erlaubt die Erfassung des Umfeldobjekts mittels zweier unterschiedlich arbeitender Sensoren eine differenzierte Reaktion auf das Umfeldobjekt in Abhängigkeit von dessen Objektkategorie oder von dessen noch zu erläuterndem Objekttyp. Damit wird nicht nur die Betriebssicherheit, sondern auch die Betriebseffizienz gesteigert.

Eine weitere Steigerung der Betriebseffizienz lässt sich erreichen, indem die Sensoren einen gemeinsamen Erfassungsbereich aufweisen, und/oder, indem die beiden Sensoren gleichzeitig Sensorinformationen für die Umfeldinformation zu dem Umfeldobjekt erzeugen. Damit ist es ohne weiteres möglich, dass die Sensorinformationen aller Sensoren der Sensoranordnung gleichzeitig vorliegen, was die Auswertegeschwindigkeit und damit die Betriebseffizienz weiter erhöht. Grundsätzlich ist es aber auch denkbar, dass die Sensorinformationen für die Umfeldinformation zu dem Umfeldobjekt sequentiell vorliegen, beispielsweise, weil die einzelnen Erfassungsbereiche der Sensoren sich nicht oder nur geringfügig überlappen.

Weiter ist es so, dass der erste Sensor der Sensoranordnung auf der Reflektion von Strahlung, insbesondere von elektromagnetischer Strahlung, beruht, wie dies bei einer Normallichtkamera der Fall ist, wobei der weitere Sensor der Sensoranordnung basierend auf der Emission von Strahlung, insbesondere von elektromagnetischer Strahlung, arbeitet, wie es bei einer Thermokamera der Fall ist. Die Vorteilhaftigkeit der Kombination zweier solcher Sensoren wurde weiter oben bereits erläutert.

Bei den besonders bevorzugten Ausgestaltungen gemäß den Ansprüchen 3 bis 5 wird eine Unterteilung der Umfeldobjekte in unterschiedliche Objektkategorien (Anspruch 3) und in unterschiedliche Objekttypen (Anspruch 4) vorgenommen, was eine differenzierte Erzeugung der Steueraktionen durch das Fahrerassistenzsystem vereinfacht. Der Objekttyp ist hier und vorzugsweise eine Unterkategorie der jeweiligen Objektkategorie. Vorzugsweise erzeugt das Fahrerassistenzsystem die jeweilige Steueraktion in Abhängigkeit von der Objektkategorie und/oder dem Objekttyp.

Für die von dem Fahrerassistenzsystem basierend auf den Umfeldinformationen erzeugten Steueraktionen sind verschiedene Varianten denkbar. Gemäß Anspruch 6 können diese Steueraktionen eine Warnaktion, eine Bremsaktion, eine Lenkaktion oder eine Verstellaktion eines Arbeitsorgans umfassen. Welche dieser Aktionen in welcher Intensität durchgeführt wird, entscheidet das Fahrerassistenzsystem nach vorbestimmten Kriterien.

Im Folgenden wird die Erfindung anhand einer lediglich ein Ausführungsbeispiel darstellenden Zeichnung näher erläutert. In der Zeichnung zeigt
- Fig. 1: eine vorschlagsgemäße selbstfahrende landwirtschaftliche Arbeitsmaschine in einer Ansicht von vorne,
- Fig. 2: die Arbeitsmaschine gemäß Fig. 1 in einer ersten Betriebssituation,
- Fig. 3: die Arbeitsmaschine gemäß Fig. 1 in einer zweiten Betriebssituation und
- Fig. 4: eine schematische Darstellung der sensorbasierten Erzeugung von Steueraktionen durch das Fahrerassistenzsystem der Arbeitsmaschine gemäß Fig. 1.

Die vorschlagsgemäße Lösung lässt sich auf einen weiten Bereich selbstfahrender landwirtschaftlicher Arbeitsmaschinen anwenden. Dazu gehören Mähdrescher, Feldhäcksler, Zugmaschinen, insbesondere Traktoren, o. dgl.. Bei dem dargestellten und insoweit bevorzugten Ausführungsbeispiel handelt es sich bei der Arbeitsmaschine 1 um einen Mähdrescher, der in an sich üblicher Weise mit einem Vorsatzgerät 2 ausgestattet ist. Alle Ausführungen zu einem Mähdrescher gelten für alle anderen Arten von Arbeitsmaschinen entsprechend.

Die vorschlagsgemäße Arbeitsmaschine 1 ist mit mindestens einem Arbeitsorgan 3-8 ausgestattet. Eine als Mähdrescher ausgestaltete Arbeitsmaschine 1 weist vorzugsweise die Arbeitsorgane Fahrantrieb 3, Schneidwerk 4, Dreschwerk 5, Abscheidevorrichtung 6, Reinigungsvorrichtung 7 und Verteilvorrichtung 8 auf.

Die Arbeitsmaschine 1 ist ferner mit einem Fahrerassistenzsystem 9 zum Erzeugen von Steueraktionen innerhalb der Arbeitsmaschine 1 ausgestattet. Die Steueraktionen können einerseits die Anzeige von Informationen für den Benutzer und andererseits die Ansteuerung und Parametrierung der Arbeitsorgane 3-8 betreffen.

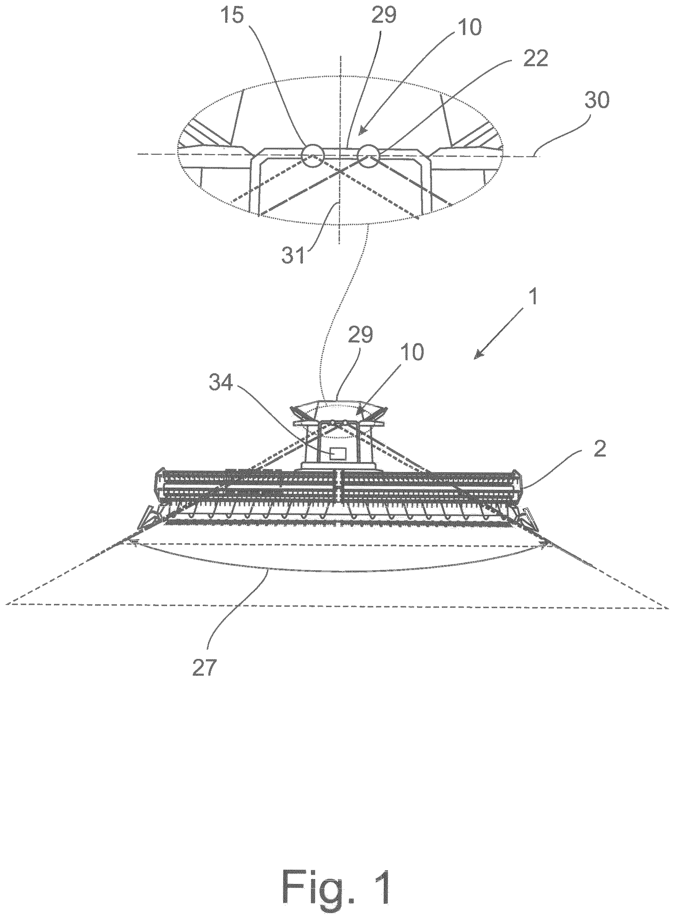

Es lässt sich den Darstellungen gemäß den Fig. 1 bis 3 entnehmen, dass eine Sensoranordnung 10 zum Erzeugen von Umfeldinformationen 11-14 vorgesehen ist, wobei das Fahrerassistenzsystem 9 die Steueraktionen jeweils basierend auf den Umfeldinformationen 11-14 erzeugt. Hierfür weist die Sensoranordnung 10 vorzugsweise einen ersten Sensor 15 auf, der eine erste Sensorinformation 16-19 basierend auf einer ersten physikalischen Eigenschaft eines Umfeldobjekts 20, 21 im Umfeld der Arbeitsmaschine 1 erzeugt. Bei dem ersten Sensor 15 handelt es sich vorzugsweise um eine Normallichtkamera, so dass die erste Sensorinformation 16-19 eine entsprechende Abbildung des Umfeldobjekts 20, 21 im sichtbaren Spektrum ist.

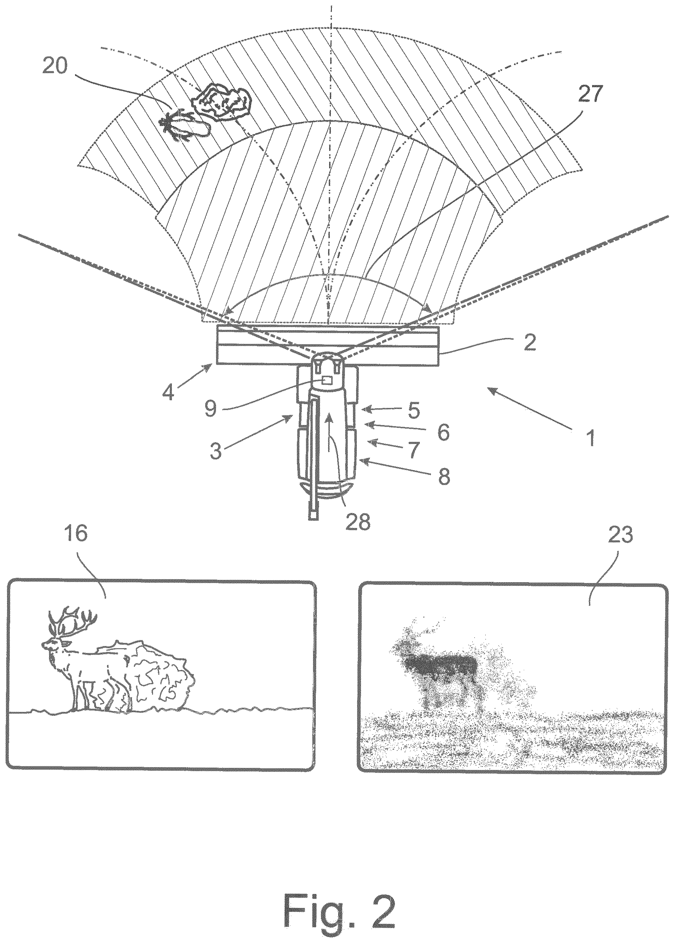

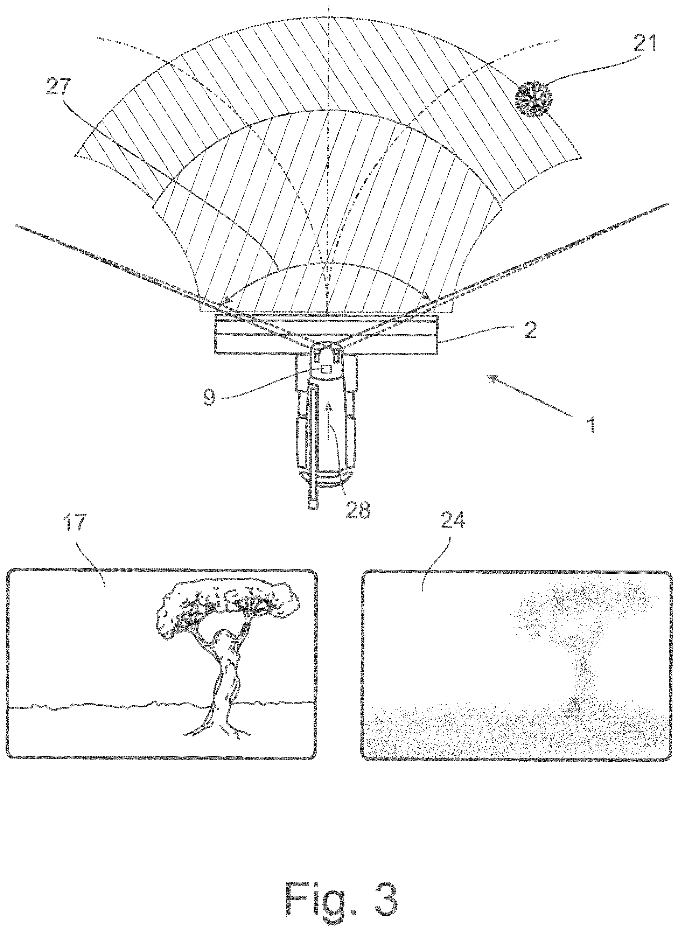

Bei dem Umfeldobjekt 20, 21 kann es sich um jedwedes Objekt im Umfeld der Arbeitsmaschine 1 handeln, das in irgendeiner Weise vom Umfeld der Arbeitsmaschine 1 im Übrigen unterscheidbar ist. Typische Umfeldobjekte sind Tiere 20 (Fig. 2) oder Hindernisse wie Bäume 21 (Fig. 3), Steine o. dgl..

Weiter vorzugsweise weist die Sensoranordnung 10 mindestens einen weiteren Sensor 22 auf, der eine weitere Sensorinformation 23-26 basierend auf einer weiteren physikalischen Eigenschaft des Umfeldobjekts 20, 21 erfasst. Hier und vorzugsweise weist die Sensoranordnung 10 genau einen weiteren Sensor 22 auf. Alle diesbezüglichen Ausführungen gelten für alle zusätzlich vorgesehenen, weiteren Sensoren entsprechend.

Bei dem weiteren Sensor 22 handelt es sich bei dem dargestellten und insoweit bevorzugten Ausführungsbeispiel um einen Thermosensor, wie ebenfalls noch erläutert wird. Der Thermosensor erzeugt eine Abbildung des Umfeldobjekts 20, 21 im nicht sichtbaren Infrarotspektrum.

Vorzugsweise erzeugt das Fahrerassistenzsystem 9 aus der ersten Sensorinformation 16-19 und der weiteren Sensorinformation 23-26 eine resultierende Umfeldinformation 11-14 zu ein und demselben Umfeldobjekt 20, 21. Der Informationsgehalt der Umfeldinformation 11-14 ist durch die Kombination der ersten Sensorinformation und der weiteren Sensorinformation besonders hoch, da die beiden Sensoren 15, 22 jeweils basierend auf unterschiedlichen physikalischen Eigenschaften des Umfeldobjekts 20, 21 arbeiten und entsprechend komplementäre Informationen zu dem Umfeldobjekt 20, 21 liefern.

Der erste Sensor 15 und der weitere Sensor 22 sind vorzugsweise derart ausgestaltet und angeordnet, dass die Sensoren 15, 22 einen gemeinsamen Erfassungsbereich 27 aufweisen (Fig. 1). Dies bedeutet, dass sich die Erfassungsbereiche der Sensoren 15, 22 zumindest insoweit überlappen, als sich ein gemeinsamer Erfassungsbereich 27 ergibt. Die einzelnen Erfassungsbereiche der Sensoren 15, 22 müssen entsprechend nicht zueinander identisch sein.

Ferner ist es vorzugsweise so, dass der erste Sensor 15 und der weitere Sensor 22 gleichzeitig Sensorinformationen 16-19, 23-26 für die Umfeldinformation 11-14 zu ein und demselben Umfeldobjekt 20, 21 erzeugen. Durch die gleichzeitige Bereitstellung der Sensorinformationen 16-19, 23-26 beider Sensoren 15, 22 ist die Erzeugung der Umfeldinformationen 11-14 mit hoher Wiederholfrequenz möglich, was die Betriebssicherheit weiter erhöht.

Vorzugsweise liegt der gemeinsame Erfassungsbereich 27 der Sensoren 15, 22 im Umfeld der Arbeitsmaschine 1, vorzugsweise hinsichtlich der Vorfahrtrichtung 28 vor der Arbeitsmaschine 1, wie in der Zeichnung dargestellt.

Es lässt sich der Detaildarstellung gemäß Fig. 1 entnehmen, dass die, hier und vorzugsweise zwei, Sensoren 15, 22 an der Fahrerkabine 29 der Arbeitsmaschine 1 angeordnet sind. Ganz allgemein ist es bevorzugt, dass die Sensoren 15, 22 nebeneinander, insbesondere auf einer horizontal verlaufenden, gedachten Linie 30 angeordnet sind. In besonders bevorzugter Ausgestaltung sind die Sensoren 15, 22 bezogen auf eine längs der Arbeitsmaschine 1 vertikal verlaufende Mittelebene 31 symmetrisch zueinander angeordnet, was eine entsprechend symmetrische Erstreckung des gemeinsamen Erfassungsbereichs 27 ermöglicht.

Wie oben angesprochen, arbeiten die beiden Sensoren 15, 22 basierend auf unterschiedlichen physikalischen Eigenschaften des Umfeldobjekts 20, 21, so dass sich für die jeweils resultierende Umfeldinformation 11-14 ein besonders hoher Informationsgehalt ergibt.

Der erste Sensor 15 der Sensoranordnung 10 erzeugt die erste Sensorinformation 16-19 vorzugsweise basierend auf der Reflektion elektromagnetischer Strahlung, insbesondere von Laserstrahlung oder von sichtbarer Lichtstrahlung, von dem Umfeldobjekt 20, 21. Entsprechend handelt es sich bei dem ersten Sensor 15 vorzugsweise um einen Lasersensor, insbesondere einen 3D-Lasersensor, einen Laserscanner o. dgl.. In besonders bevorzugter Ausgestaltung ist der erste Sensor 15 jedoch als Normallichtkamera, insbesondere als 3D-Kamera oder als Time-of-Flight-Kamera (TOF-Kamera) ausgestaltet. Denkbar ist auch, dass der erste Sensor 15 als Radarsensor ausgestaltet ist, bei dem es sich insbesondere um einen 3D-Radarsensor handelt. Schließlich kann der erste Sensor 15 in einer besonders kostengünstigen Ausgestaltung als Ultraschallsensor ausgestaltet sein.

In Abhängigkeit von der Ausgestaltung des ersten Sensors 15 kann die erste Sensorinformation 16-19 ganz unterschiedlich Aufschluss über das Umfeldobjekt 20, 21 geben. Je nach Sensor 15 kann die erste Sensorinformation 16-19 eine Formgebung und/oder eine Farbgebung und/oder eine Bewegungsgeschwindigkeit und/oder eine Bewegungscharakteristik des Umfeldobjekts 20, 21 sein. Denkbar ist auch, dass die erste Sensorinformation 16-19 lediglich die Bewegungsrichtung des Umfeldobjekts 20, 21 umfasst.

Der weitere Sensor 22 der Sensoranordnung 10 erzeugt die weitere Sensorinformation 23-26 vorzugsweise basierend auf der Emission elektromagnetischer Strahlung, insbesondere von Infrarotstrahlung, des Umfeldobjekts 20, 21. Entsprechend handelt es sich bei der weiteren Sensorinformation 23-26 vorzugsweise um eine Temperatur oder ein Temperaturspektrum des Umfeldobjekts 20, 21.

Die jeweilige Umfeldinformation 11-14 umfasst einen oder mehrere Beschreibungsparameter für das betreffende Umfeldobjekt 20, 21, die eine Zuordnung des Umfeldobjekts 20, 21 zu vordefinierten Kategorien oder Typen von Umfeldobjekten ermöglichen.

Entsprechend ist es zunächst einmal vorgesehen, dass das Fahrerassistenzsystem 9 dem Umfeldobjekt 20, 21 basierend auf den Umfeldinformationen 11-14 eine Objektkategorie 32, 33 aus den Objektkategorien "lebend" und "nicht lebend" zuordnet. Bei der in Fig. 2 links dargestellten, ersten Sensorinformation 16 könnte es sich bei dem dort gezeigten Umfeldobjekt 20 grundsätzlich um einen kleinen Baum o. dgl. handeln. Allerdings zeigt die in Fig. 2 rechts dargestellte, weitere Sensorinformation 23, dass es sich nach der ermittelten Temperatur des Umfeldobjekts 20 um ein Tier und im Hinblick auf die nach der ersten Sensorinformation 16 ermittelten Formgebung um einen Hirsch handeln muss. Mit der vorschlagsgemäßen Lösung ist es also nicht nur möglich, die Objektkategorien "lebend" und "nicht lebend" zu ermitteln, sondern auch den jeweiligen Objekttyp wie "Tier", "Mensch", "starrer Gegenstand" oder "Fahrzeug mit Motor".

Bei der in Fig. 3 gezeigten Situation ist es dagegen so, dass die in Fig. 3 links dargestellte, erste Sensorinformation 17 Aufschluss darüber geben könnte, dass es sich bei dem Umfeldobjekt 21 um einen Menschen handelt. Allerdings zeigt die in Fig. 3 rechts dargestellte, weitere Sensorinformation 24, dass dem Umfeldobjekt 21 die Objektkategorie "nicht lebend" zuzuordnen ist. Aus diesen beiden Sensorinformationen 17, 24 erzeugt das Fahrerassistenzsystem 9 die Umfeldinformation, dass es sich bei dem Umfeldobjekt 21 um einen Baum handelt.

Für die Zuordnung der Objektkategorie und/oder des Objekttyps zu dem Umfeldobjekt 20, 21 ist in einem Speicher des Fahrerassistenzsystems 9 eine entsprechende Vorschrift abgelegt. Hier und vorzugsweise ist es so, dass das Fahrerassistenzsystem 9 die Zuordnung der Objektkategorie und/oder des Objekttyps davon abhängig macht, ob eine erste notwendige Bedingung betreffend die erste Sensorinformation 16-19, insbesondere eine vorbestimmte Formgebung des Umfeldobjekts 20, 21, und eine zweite notwendige Bedingung betreffend die weitere Sensorinformation 23-26, insbesondere ein vorbestimmter Temperaturbereich, erfüllt ist. Hier lassen sich für die Objektkategorien bzw. Objekttypen einfache Regeln aufstellen, die eine gute Abdeckung der zu erwartenden Umfeldobjekte 20, 21 ermöglichen und die insbesondere automatisiert abgearbeitet werden können.

Es sind unterschiedliche vorteilhafte Varianten für die Reihenfolge bei der Auswertung der verschiedenen Sensorinformationen 16-19, 23-26 denkbar. Hier und vorzugsweise ist es so, dass das Fahrerassistenzsystem 9 in einem Überwachungsschritt die Sensorinformationen 23-26 des weiteren Sensors 22 daraufhin überwacht, ob im gemeinsamen Erfassungsbereich 27 überhaupt ein Umfeldobjekt 20, 21 vorliegt. Für den Fall, dass ein Umfeldobjekt 20, 21 detektiert worden ist, ermittelt das Fahrerassistenzsystem 9 in einem Auswerteschritt aus den Sensorinformationen 16-19 des ersten Sensors 15 und den Sensorinformationen 23-26 des weiteren Sensors 22 die Objektkategorie 32, 33 und/oder den Objekttyp des Umfeldobjekts 20, 21.

Nachdem die Objektkategorie 32, 33 und/oder der Objekttyp des Umfeldobjekts 20, 21 feststeht, kann das Fahrerassistenzsystem 9 in Abhängigkeit von eben diesen Informationen die Steueraktionen erzeugen. Dabei ist es vorzugsweise so, dass die Umfeldinformationen nicht nur die Objektkategorie 32, 33 bzw. den Objekttyp des Umfeldobjekts 20, 21 umfassen, sondern auch Positionsinformationen oder Bewegungsinformationen relativ zu der Arbeitsmaschine 1, so dass diese zusätzlichen Informationen ebenfalls bei der Erzeugung der Steueraktionen berücksichtigt werden können.

Wie oben erläutert, ergibt sich durch die unterschiedliche Arbeitsweise der Sensoren 15, 22 ein besonders hoher Informationsgehalt der Umfeldinformationen. Im Sinne einer hohen Qualität der Sensorinformationen 16-19, 23-26 kann es vorteilhafterweise vorgesehen sein, dass das Fahrerassistenzsystem 9 die Sensorinformationen 16-19, 23-26 der Sensoren 15, 22 der Sensoranordnung 10 in Abhängigkeit von der Beleuchtung des gemeinsamen Erfassungsbereichs 27 unterschiedlich berücksichtigt. Beispielsweise kann es vorgesehen sein, dass bei Tage beide Sensoren 15, 22 berücksichtigt werden, während bei Nacht in erster Linie auf den weiteren Sensor 22, der vorzugsweise als thermischer Sensor ausgestaltet ist, zurückgegriffen wird.

Die von dem Fahrerassistenzsystem 9 basierend auf den Umfeldinformationen 11-14 erzeugten Steueraktionen können in Abhängigkeit von der Umfeldinformation ganz unterschiedlich gestaltet sein. Beispielsweise umfassen die Steueraktionen eine Warnaktion für den Bediener über eine Mensch-Maschine-Schnittstelle 34 und/oder eine Bremsaktion durch Ansteuerung einer nicht dargestellten Bremsanordnung und/oder eine Lenkaktion durch Ansteuerung einer nicht dargestellten Lenkanordnung und/oder eine Verstellaktion eines Arbeitsorgans 3-8 wie das Hochsetzen und/oder Abschalten des Schneidwerks 4 einer als Mähdrescher ausgestalteten Arbeitsmaschine 1.

Die Warnaktion für den Bediener über die Mensch-Maschine-Schnittstelle 34 kann beispielsweise die Ausgabe akustischer oder optischer Warnsignale oder die Anzeige von Kamerabildern sein. Dabei ist es denkbar, dass einem Kamerabild die entsprechende Warninformation, insbesondere ein Hinweis auf das detektierte Umfeldobjekt 20, 21 überlagert ist.

Bei der Bremsaktion kann es sich, wie oben angedeutet, um die Ansteuerung einer Bremsanordnung oder um das Auslösen einer Motorbremse handeln. Grundsätzlich kann die Bremsaktion auch eine Bremsanweisung an den Bediener über die Mensch-Maschine-Schnittstelle 34 umfassen.

Die Lenkaktion kann grundsätzlich eine von dem Fahrerassistenzsystem 9 geplante und durchgeführte Ausweichbewegung, insbesondere auf der Basis von GPS-Navigationsdaten, umfassen. Denkbar ist aber auch, dass die Lenkaktion lediglich eine Lenkbegrenzung umfasst, um zu vermeiden, dass der Bediener eine Kollisionssituation mit dem detektierten Umfeldobjekt 20, 21 erzeugt. Andere Steueraktionen sind denkbar.

Es ergibt sich aus einer Zusammenschau der Fig. 2 und 3, dass sich in Abhängigkeit von der Objektkategorie und/oder dem Objekttyp und/oder der Position und/oder der Bewegung des detektierten Umfeldobjekts 20, 21 resultierende Steueraktionen mit unterschiedlicher Dringlichkeit ergeben. Beispielsweise ist bei einer Bewegung eines lebenden Umfeldobjekts 20, 21 in den Arbeitsbereich der Arbeitsmaschine 1 die Steueraktion eines unmittelbaren Bremsens in hoher Intensität, also hoher Bremsleistung, gefordert (Fig. 2). Handelt es sich bei dem Umfeldobjekt 20, 21 dagegen um einen starren Gegenstand, der sich noch in sicherer Entfernung befindet, ist die Dringlichkeit der anstehenden Steueraktion, nämlich dem Einleiten einer Ausweichbewegung, vergleichsweise gering (Fig. 3).

Entsprechend wird vorgeschlagen, dass das Fahrerassistenzsystem 9 den Umfeldinformationen 11-14 jeweils eine Dringlichkeitsstufe 35-38 zuordnet und die Steueraktionen wie oben erläutert basierend auf den Umfeldinformationen 11-14 und den jeweils zugeordneten Dringlichkeitsstufen 35-38 erzeugt. Durch diese Systematisierung der Dringlichkeit einer Umfeldinformation 11-14 lässt sich die Zuordnung leicht automatisiert durchführen.

Für die Ermittlung der jeweiligen Dringlichkeitsstufe 35-38 sind verschiedene vorteilhafte Varianten denkbar. Hier und vorzugsweise leitet das Fahrerassistenzsystem 9 die jeweilige Dringlichkeitsstufe 35-38 aus der Entfernung des Umfeldobjekts 20, 21 von der Arbeitsmaschine 1 und/oder aus der Fahrgeschwindigkeit der Arbeitsmaschine 1 ab. Auch die Bewegungsrichtung und/oder die Bewegungsgeschwindigkeit des Umfeldobjekts 20, 21 kann bzw. können in die Ermittlung der jeweiligen Dringlichkeitsstufe eingehen.

Alternativ oder zusätzlich kann es vorgesehen sein, dass das Fahrerassistenzsystem 9 die jeweilige Dringlichkeitsstufe 35-38 aus der ermittelten Objektkategorie und/oder aus dem ermittelten Objekttyp ableitet. Beispielsweise ist die Ermittlung eines Umfeldobjekts 20, 21 der Objektkategorie "lebend" und des Objekttyps "Mensch" stets mit einer hohen Dringlichkeitsstufe zu versehen, um jegliche Verletzungsgefahren eines Menschen auszuschließen.

Grundsätzlich kann es aber auch vorgesehen sein, dass mindestens einem Sensor 15, 22 der Sensoranordnung 10 eine vorbestimmte Dringlichkeitsstufe zugeordnet ist. Dies ist beispielsweise der Fall, wenn es sich bei dem jeweiligen Sensor um einen unmittelbar am Schneidwerk 4 einer als Mähdrescher ausgestalteten Arbeitsmaschine 1 handelt, der einen kleinen Erfassungsbereich aufweist. Für den Fall, dass irgendein Umfeldobjekt 20, 21 im Erfassungsbereich dieses Kollisionssensors landet, ist der betreffenden Umfeldinformation 11-14 stets eine hohe Dringlichkeitsstufe zuzuordnen.

Das Fahrerassistenzsystem 9 setzt die auf die Umfeldinformationen 11-14 zurückgehenden Steueraktionen in Abhängigkeit von der jeweiligen Dringlichkeitsstufe 35-38 vorrangig oder nachrangig gegenüber anderen anstehenden Steueraktionen um. Bei einer Steueraktion, die aus einer Umfeldinformation hoher Dringlichkeitsstufe 35-38 hervorgeht, kann grundsätzlich ein Mechanismus nach Art eines Interrupts Anwendung finden, wie weiter oben bereits angedeutet worden ist.

Grundsätzlich kann es vorgesehen sein, dass mindestens eine Dringlichkeitsstufe 35-38 einer vorbestimmten Steueraktion zugeordnet ist. Beispielsweise kann es vorgesehen sein, dass genau drei Dringlichkeitsstufen 35-38 vorgesehen sind, die jeweils einer der noch zu erläuternden Steueraktionen Warnaktion, Lenkaktion und Bremsaktion zugeordnet sind. Die eindeutige Zuordnung von Dringlichkeitsstufen 35-38 zu Steueraktionen vereinfacht die Ermittlung der Steueraktionen durch das Fahrerassistenzsystem 9. Dabei ist zu berücksichtigen, dass die Steueraktionen, insbesondere die obigen drei Steueraktionen, jeweils mehrere Unteraktionen umfassen können, die je nach Umfeldinformation ausgelöst werden können.

Alternativ oder zusätzlich kann es vorgesehen sein, dass das Fahrerassistenzsystem 9 die auf die Umfeldinformationen 11-14 zurückgehenden Steueraktionen in Abhängigkeit von der jeweiligen Dringlichkeitsstufe 35-38 mit unterschiedlichen Steuerparametern, insbesondere in unterschiedlicher Intensität, umsetzt. Dies wurde im Zusammenhang mit der Bremsaktion bereits angesprochen.

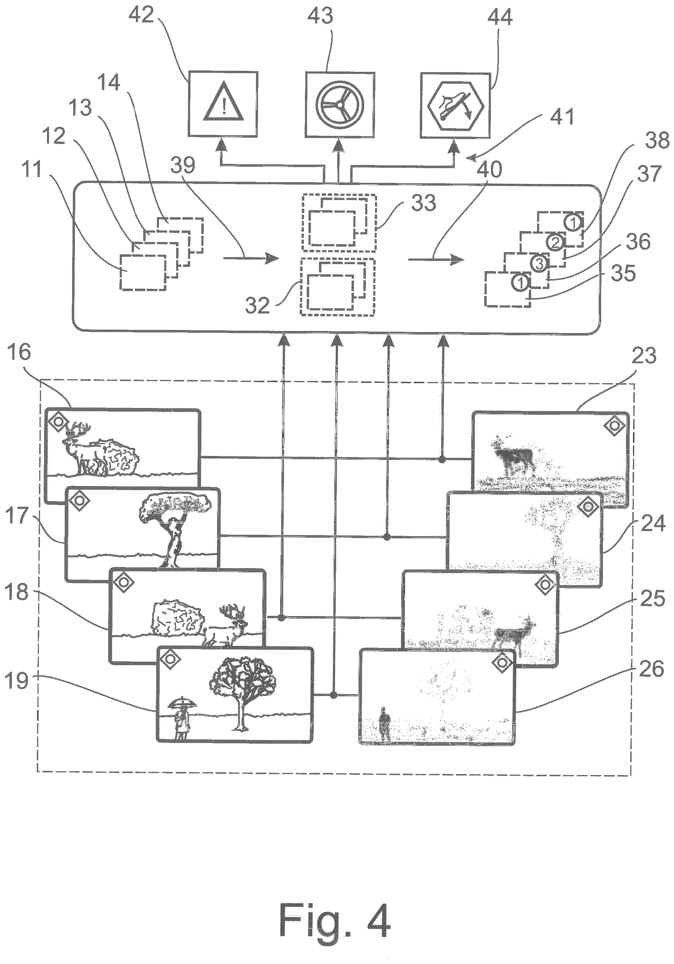

Fig. 4 zeigt eine bevorzugte Arbeitsweise des Fahrerassistenzsystems 9. Im unteren Block ist gezeigt, dass die Sensoranordnung 10 für unterschiedliche Situationen erste Sensorinformationen 16-19 (links) und weitere Sensorinformationen 23-26 (rechts) erzeugt. Die jeweils zugehörigen Sensorinformationen 16, 23; 17, 24; 18, 25; 19, 26 werden zu Umfeldinformationen 11-14 verarbeitet, die in einem Auswerteschritt 39 wie oben erläutert, kategorisiert bzw. typisiert werden. Anschließend werden die Umfeldinformationen 11-14 in einem Priorisierungsschritt 40, wie ebenfalls erläutert, mit Dringlichkeitsstufen 35-38 versehen. Schließlich ermittelt das Fahrerassistenzsystem 9 in einem Planungsschritt 41 die adäquate Steueraktion 42-44, bei der es sich in der in Fig. 4 gezeigten beispielhaften Übersicht um eine Warnaktion 42, eine Lenkaktion 43 oder um eine Bremsaktion 44 handeln kann. Denkbar ist hier auch das Auslösen der weiter oben genannten, weiteren Steueraktionen.

Fig. 4 zeigt im Ergebnis, dass eine differenzierte Erfassung von Umfeldobjekten 20, 21 und weiter eine differenzierte Reaktion auf die Detektion der Umfeldobjekte 20, 21 möglich ist, wobei sich aus der Systematisierung der Detektion mit mindestens zwei Sensoren, 15, 22 und aus der Zuordnung von Dringlichkeitsstufen ein automatisierbarer Ablauf ergibt, der neben einer hohen Betriebssicherheit auch eine hohe Betriebseffizienz gewährleistet.

### Bezugszeichenliste

- 1: Arbeitsmaschine
- 2: Vorsatzgerät
- 3: Fahrantrieb
- 4: Schneidwerk
- 5: Dreschwerk
- 6: Abscheidevorrichtung
- 7: Reinigungsvorrichtung
- 8: Verteilvorrichtung
- 9: Fahrerassistenzsystem
- 10: Sensoranordnung
- 11, 12, 13, 14: Umfeldinformation
- 15: 1. Sensor
- 16, 17, 18, 19: 1. Sensorinformation
- 20, 21: Umfeldobjekt
- 22: weiterer Sensor
- 23, 24, 25, 26: weitere Sensorinformation
- 27: Erfassungsbereich
- 28: Vorfahrtrichtung
- 29: Fahrerkabine
- 30: horizontale Linie
- 31: Mittelebene
- 32, 33: Objektkategorie
- 34: Mensch-Maschine-Schnittstelle
- 35, 36, 37, 38: Dringlichkeitsstufe
- 39: Auswerteschritt
- 40: Priorisierungsschritt
- 41: Planungsschritt
- 42, 43, 44: Steueraktion

## Patentansprüche

1. Selbstfahrende landwirtschaftliche Arbeitsmaschine mit mindestens einem Arbeitsorgan (3-8), insbesondere einem Fahrantrieb (3), und mit einem Fahrerassistenzsystem (9) zum Erzeugen von Steueraktionen innerhalb der Arbeitsmaschine (1), wobei eine Sensoranordnung (10) zum Erzeugen von Umfeldinformationen (11-14) vorgesehen ist, wobei das Fahrerassistenzsystem (9) die Steueraktionen basierend auf den Umfeldinformationen (11-14) erzeugt, **dadurch gekennzeichnet,**
**dass** das Fahrerassistenzsystem (9) den Umfeldinformationen (11-14) jeweils eine Dringlichkeitsstufe (35-38) zuordnet und die Steueraktionen basierend auf den Umfeldinformationen (11-14) und den jeweils zugeordneten Dringlichkeitsstufen (35-38) erzeugt, wobei die Sensoranordnung (10) einen ersten Sensor (15) aufweist, der eine erste Sensorinformation (16-19) basierend auf einer ersten physikalischen Eigenschaft eines Umfeldobjekts (20, 21) im Umfeld der Arbeitsmaschine (1) erfasst, wobei der erste Sensor (15) auf der Reflektion von elektromagnetischer Strahlung beruht und als Normallichtkamera ausgeführt ist, und die Sensoranordnung (10) mindestens einen weiteren Sensor (22) aufweist, der eine weitere Sensorinformation (23-26) basierend auf einer weiteren physikalischen Eigenschaft des Umfeldobjekts (20, 21) erfasst, wobei der weitere Sensor (22) auf der Emission von elektromagnetischer Strahlung basiert und als Thermokamera ausgeführt ist, und dass das Fahrerassistenzsystem (9) aus der ersten Sensorinformation (16-19) und der weiteren Sensorinformation (23-26) eine Umfeldinformation (11-14) zu dem Umfeldobjekt (20, 21) erzeugt.

2. Selbstfahrende landwirtschaftliche Arbeitsmaschine nach Anspruch 1, **dadurch gekennzeichnet, dass** das Fahrerassistenzsystem (9) die auf die Umfeldinformation (11-14) zurückgehenden Steueraktionen in Abhängigkeit von der jeweiligen Dringlichkeitsstufe (35-38) vorrangig oder nachrangig gegenüber anderen anstehenden Steueraktionen umsetzt.

3. Selbstfahrende landwirtschaftliche Arbeitsmaschine nach einem der vorhergehenden Ansprüche, **dadurch gekennzeichnet, dass** das Fahrerassistenzsystem (9) dem Umfeldobjekt (20, 21) basierend auf den Umfeldinformationen (11-14) eine Objektkategorie (32, 33) aus den Objektkategorien "lebend" und "nicht lebend" zuordnet.

4. Selbstfahrende landwirtschaftliche Arbeitsmaschine nach Anspruch 3, **dadurch gekennzeichnet, dass** das Fahrerassistenzsystem (9) dem Umfeldobjekt (20, 21) basierend auf den Umfeldinformationen (11-14) innerhalb der jeweiligen Objektkategorie (32, 33) einen Objekttyp wie "Tier", "Mensch", "starrer Gegenstand" oder "Fahrzeug mit Motor" zugeordnet.

5. Selbstfahrende landwirtschaftliche Arbeitsmaschine nach Anspruch 4, **dadurch gekennzeichnet, dass** das Fahrerassistenzsystem (9) die Zuordnung der Objektkategorie (32, 33) und/oder des Objekttyps davon abhängig macht, ob eine erste notwendige Bedingung betreffend die erste Sensorinformation (16-19), insbesondere eine vorbestimmte Formgebung, und eine zweite notwendige Bedingung betreffend die weitere Sensorinformation (23-26), insbesondere ein vorbestimmter Temperaturbereich, erfüllt ist.

6. Selbstfahrende landwirtschaftliche Arbeitsmaschine nach einem der vorhergehenden Ansprüche, **dadurch gekennzeichnet, dass** die von dem Fahrerassistenzsystem (9) basierend auf den Umfeldinformationen (11-14) erzeugten Steueraktionen eine Warnaktion für den Bediener über eine Mensch-Maschine-Schnittstelle (34) und/oder eine Bremsaktion durch Ansteuerung einer Bremsanordnung und/oder eine Lenkaktion durch Ansteuerung einer Lenkanordnung und/oder eine Verstellaktion eines Arbeitsorgans (3-8) umfassen.

7. Selbstfahrende landwirtschaftliche Arbeitsmaschine nach Anspruch 6, **dadurch gekennzeichnet, dass** mindestens eine Dringlichkeitsstufe (35-38) einer vorbestimmten Steueraktion zugeordnet ist.

8. Selbstfahrende landwirtschaftliche Arbeitsmaschine nach einem der vorhergehenden Ansprüche, **dadurch gekennzeichnet, dass** das Fahrerassistenzsystem (9) die Dringlichkeitsstufe (35-38) aus der Entfernung des Umfeldobjekts (20, 21) von der Arbeitsmaschine (1) und/oder aus der Fahrgeschwindigkeit der Arbeitsmaschine (1) ableitet.

9. Selbstfahrende landwirtschaftliche Arbeitsmaschine nach Anspruch 4, **dadurch gekennzeichnet, dass** das Fahrerassistenzsystem (9) die Dringlichkeitsstufe (35-38) aus der Objektkategorie (32, 33) und/oder dem Objekttyp ableitet.

10. Selbstfahrende landwirtschaftliche Arbeitsmaschine nach einem der vorhergehenden Ansprüche, **dadurch gekennzeichnet, dass** mindestens einem Sensor (15, 22) der Sensoranordnung (10) eine vorbestimmte Dringlichkeitsstufe (35-38) zugeordnet ist.

11. Selbstfahrende landwirtschaftliche Arbeitsmaschine nach einem der vorhergehenden Ansprüche, **dadurch gekennzeichnet, dass** das Fahrerassistenzsystem (9) die auf die Umfeldinformationen (11-14) zurückgehenden Steueraktionen in Abhängigkeit von der jeweiligen Dringlichkeitsstufe (35-38) mit unterschiedlichen Steuerparametern, insbesondere in unterschiedlicher Intensität, umsetzt.

## Claims

1. A self-propelled agricultural working machine having at least one working unit (3 - 8), in particular a propulsion unit (3), and having a driver assistance system (9) for generating control actions within the working machine (1), wherein a sensor system (10) for generating pieces of environmental information (11 - 14) is provided, wherein the driver assistance system (9) generates the control actions on the basis of the pieces of environmental information (11 - 14), **characterized in that** the driver assistance system (9) assigns an urgency level (35 - 38) to each piece of environmental information (11 - 14) and generates the control actions on the basis of the pieces of environmental information (11 - 14) and the respectively assigned urgency levels (35 - 38), wherein the sensor system (10) comprises a first sensor (15) which captures a first piece of sensor information (16 - 19) on the basis of a first physical property of an environmental object (20, 21) in the environment of the working machine (1), wherein the operation of the first sensor (15) is based on the reflection of electromagnetic radiation and is configured as a standard light camera, and the sensor system (10) comprises at least one further sensor (22) which captures a further piece of sensor information (23 - 26) on the basis of a further physical property of the environmental object (20, 21), wherein the operation of the further sensor (22) is based on the emission of electromagnetic radiation and is configured as a thermal camera, and **in that** the driver assistance system (9) generates a piece of environmental information (11 - 14) regarding the environmental object (20, 21) from the first piece of sensor information (16 - 19) and from the further piece of sensor information (23 - 26).

2. The self-propelled agricultural working machine according to claim 1, **characterized in that** the driver assistance system (9) implements the control actions relating to the pieces of environmental information (11 - 14) with higher or lower priority compared with other pending control actions as a function of the respective urgency level (35 - 38).

3. The self-propelled agricultural working machine according to one of the preceding claims, **characterized in that** the driver assistance system (9) assigns an object category (32, 33) from the object categories "living" and "not living" to the environmental object (20, 21) on the basis of the pieces of environmental information (11 - 14).

4. The self-propelled agricultural working machine according claim 3, **characterized in that** the driver assistance system (9) assigns an object type such as "animal," "person," "rigid object" or "vehicle with engine" within the respective object category (32, 33) to the environmental object (20, 21) on the basis of the pieces of environmental information (11 - 14).

5. The self-propelled agricultural working machine according to claim 4, **characterized in that** the driver assistance system (9) makes the assignment of the object category (32, 33) and/or of the object type dependent on whether a first necessary condition relating to the first piece of sensor information (16 - 19), in particular a predetermined shape, and a second necessary condition relating to the further piece of sensor information (23 - 26), in particular a predetermined temperature range, has/have been satisfied.

6. The self-propelled agricultural working machine according to one of the preceding claims, **characterized in that** the control actions generated by the driver assistance system (9) on the basis of the pieces of environmental information (11 - 14) comprise a warning action for the operator issued via a human-machine interface (34) and/or a braking action carried out by activating a brake system and/or a steering action carried out by activating a steering system and/or an action to adjust a working unit (3 - 8).

7. The self-propelled agricultural working machine according to claim 6, **characterized in that** at least one urgency level (35 - 38) is assigned to a predetermined control action.

8. The self-propelled agricultural working machine according to one of the preceding claims, **characterized in that** the driver assistance system (9) derives the urgency level (35 - 38) from the distance of the environmental object (20, 21) from the working machine (1) and/or from the driving speed of the working machine (1).

9. The self-propelled agricultural working machine according to claim 4, **characterized in that** the driver assistance system (9) derives the urgency level (35 - 38) from the object category (32, 33) and/or from the object type.

10. The self-propelled agricultural working machine according one of the preceding claims, **characterized in that** a predetermined urgency level (35 - 38) is assigned to at least one sensor (15, 22) of the sensor system (10).

11. The self-propelled agricultural working machine according to one of the preceding claims, **characterized in that** the driver assistance system (9) implements the control actions which are based on the pieces of environmental information (11 - 14) as a function of the respective urgency levels (35 - 38) using different control parameters, in particular using different intensities.

## Revendications

1. Machine de travail agricole automotrice comprenant au moins un organe de travail (3-8), en particulier un groupe propulseur (3), et comprenant un système d'assistance au conducteur (9) pour générer des actions de commande à l'intérieur de la machine de travail (1), un agencement de capteur (10) étant prévu pour générer des informations d'environnement (11-14), le système d'assistance au conducteur (9) générant les actions de commande sur la base des informations d'environnement (11-14), **caractérisée en ce que** le système d'assistance au conducteur (9) associe aux informations d'environnement (11-14) respectivement un niveau de priorité (35-38) et génère les actions de commande sur la base des informations d'environnement (11-14) et des niveaux de priorité respectivement associés (35-38), l'agencement de capteur (10) comportant un premier capteur (15) qui détecte dans l'environnement de la machine de travail (1) une première information de capteur (16, 19) sur la base d'une première propriété physique d'un objet d'environnement (20, 21), le premier capteur (15) reposant sur la réflexion de rayonnement électromagnétique et étant conformé en caméra à lumière naturelle, et l'agencement de capteur (10) comprenant au moins un autre capteur (22) qui détecte une autre information de capteur (23-26) sur la base d'une autre propriété physique de l'objet d'environnement (20, 21), l'autre capteur (22) étant basé sur l'émission d'un rayonnement électromagnétique et étant conformé en caméra thermique, et **en ce que** le système d'assistance au conducteur (9) génère à partir de la première information de capteur (16-19) et de l'autre information de capteur (23-26) une information d'environnement (11-14) relative à l'objet d'environnement (20, 21).

2. Machine de travail agricole automotrice selon la revendication 1, **caractérisée en ce que** le système d'assistance au conducteur (9) convertit les actions de commande reposant sur les informations d'environnement (11-14) en fonction du niveau de priorité respectif (35-38) avec préséance ou sans préséance par rapport à d'autres actions de commande en instance.

3. Machine de travail agricole automotrice selon une des revendications précédentes, **caractérisée en ce que** le système d'assistance au conducteur (9) associe à l'objet d'environnement (20, 21), sur la base des informations d'environnement (11-14), une catégorie d'objet (32, 33) issue des catégories d'objet « vivant » et « non vivant ».

4. Machine de travail agricole automotrice selon la revendication 3, **caractérisé en ce que** le système d'assistance au conducteur (9) associe à l'objet d'environnement (20, 21), sur la base des informations d'environnement (11-14), à l'intérieur de la catégorie d'objet respective (32, 33), un type d'objet comme « animal », « humain », « objet fixe » ou « véhicule à moteur ».

5. Machine de travail agricole automotrice selon la revendication 4, **caractérisée en ce que** le système d'assistance au conducteur (9) fait dépendre l'association de la catégorie d'objet (32, 33) et/ou du type d'objet de ce qu'une première condition nécessaire applicable à la première information de capteur (16-19), en particulier une conformation prédéterminée, et une seconde condition nécessaire applicable aux autres informations de capteur (23-26), en particulier une plage de température prédéterminée, sont remplies ou non.

6. Machine de travail agricole automotrice selon une des revendications précédentes, **caractérisée en ce que** les actions de commande générées par le système d'assistance au conducteur (9) sur la base des informations d'environnement (11-14) comprennent une action d'avertissement pour l'utilisateur par l'intermédiaire d'une interface homme-machine (34) et/ou une action de freinage par l'intermédiaire de l'actionnement d'un agencement de freinage et/ou une action de braquage par l'intermédiaire de l'actionnement d'un agencement de braquage et/ou une action de réglage d'un organe de travail (3-8).

7. Machine de travail agricole automotrice selon la revendication 6, **caractérisée en ce qu'**au moins un niveau de priorité (35-38) est associé à une action de commande prédéterminée.

8. Machine de travail agricole automotrice selon une des revendications précédentes, **caractérisée en ce que** le système d'assistance au conducteur (9) déduit le niveau de priorité (35-38) de la distance de l'objet d'environnement (20, 21) à la machine de travail (1) et/ou de la vitesse de marche de la machine de travail (1) .

9. Machine de travail agricole automotrice selon la revendication 4, **caractérisée en ce que** le système d'assistance au conducteur (9) déduit le niveau de priorité (35-38) de la catégorie d'objet (32, 33) et/ou du type d'objet.

10. Machine de travail agricole automotrice selon une des revendications précédentes, **caractérisée en ce qu'**à au moins un capteur (15, 22) de l'agencement de capteur (10) est associé un niveau de priorité prédéterminé (35-38).

11. Machine de travail agricole automotrice selon une des revendications précédentes, **caractérisée en ce que** le système d'assistance au conducteur (9) convertit les actions de commande reposant sur les informations d'environnement (11-14) en fonction du niveau de priorité respectif (35-38) avec divers paramètres de commande, en particulier avec une intensité différente.
